# EUROPEAN PATENT APPLICATION

(11) **EP 4 692 619 A1**
(43) Date of publication of application: **11.02.2026**
(21) Application number: 24193232.6
(22) Date of filing: 07.08.2024
(51) Int. Cl.: F16L 3/00, F16L 3/01, F16L 3/02, F16L 3/10, F16L 55/00

(54) **ASSEMBLY SYSTEM FOR ASSEMBLING A CONDUIT AND A FITTING ELEMENT FOR AN AUTOMATION SYSTEM**

(71) Applicant: ABB SCHWEIZ AG, 5400 Baden (CH)
(72) Inventor: LINDBERG, Alexa Michelle, San Antonio, 78260 (US); KNAUS, Michael, Coventry, CV5 7NQ (GB); CHAHAL, Harvinder Singh, Styvechale, Coventry, CV3 5BA (GB)
(74) Representative: Maiwald GmbH

(57) **Abstract**

The invention relates to an assembly system (100) for assembling a conduit (200) and a fitting element (300) for an automation system, which comprises a conduit leading subsystem and a fitting securing subsystem. The conduit leading subsystem is configured to drive the conduit (200) into a linear motion towards or into the fitting element (300) and comprises at least one conduit holder (110), configured to fasten the conduit (200) while being installed at the fitting element (300), a leading shaft (152) and a conduit holder adapter, to which the at least one conduit holder (110) is secured and which is configured to connect the at least one conduit holder (110) to the leading shaft (152). The fitting securing subsystem comprises at least one fitting holder, configured to fasten the fitting element (300), and a fitting holder adapter, to which the at least one fitting holder is secured and which is configured to fix the at least one fitting holder (120). The leading shaft (152) is configured to drive the at least one conduit holder (110) and the conduit holder adapter (115) jointly into the linear motion towards the at least one fitting holder (120) and the fitting holder adapter (125) of the fitting securing subsystem, so that the conduit (200) is movable towards the fitting element (300) for being installed at the fitting element (300).

## Description

### FIELD OF INVENTION

The present disclosure relates to industrial automation. In particular, the present disclosure relates to an assembly system for assembling a conduit and a fitting element for an automation system, the use of an assembly system and a method for assembly a conduit and a fitting element.

### BACKGROUND

Conventional conduit-fitting-installation for fluid conduits involves assembling pipes and fittings to create a secure, leak-proof system for transporting liquids or gases. The installation process may comprise connecting pipes with various fittings such as elbows, tees, couplings, and unions. Proper sealing techniques, such as using thread tape or pipe dope, ensure leak prevention. Sealed conduit fittings that have an integral conduit seal can provide ingress protection from dust and water. To use these fittings, a nonmetallic conduit may be installed by inserting it into the fitting until the end of the conduit contacts an internal shoulder. Typically, this process may be carried out manually by workers, which may lead to repetitive strain injury.

Further, at large conduit diameters, the installation process may become difficult to complete by hand because of the large amount of force necessary to overcome the friction from the internal seal. This may increase the installation time beyond the desirable amount and poses ergonomic risks to workers if not handled carefully.

### SUMMARY

It may be seen as an objective of the invention to provide an optimized mechanical installation method for conduit connections.

The objective is achieved by the subject matter of the independent claims. The dependent claims, the following description and the drawings show embodiments of the invention.

According to a first aspect of the present invention, an assembly system is provided for assembling a conduit and a fitting element for an automation system, which comprises a conduit leading subsystem and a fitting securing subsystem. The conduit leading subsystem is configured to drive the conduit into a linear motion towards or into the fitting element, and comprises at least one conduit holder, which is configured to fasten the conduit while being installed at the fitting element, a leading shaft and a conduit holder adapter, to which the at least one conduit holder is secured, and to which is configured to connect the at least one conduit holder to the leading shaft. The fitting securing subsystem comprises at least one fitting holder, which is configured to fasten the fitting element, and a fitting holder adapter, to which the at least one fitting holder is secured, and which is configured to fix the at least one fitting holder.

The leading shaft is configured to drive the at least one conduit holder and the conduit holder adapter jointly into the linear motion towards the at least one fitting holder and the fitting holder adapter of the fitting securing subsystem, so that the conduit is movable towards the fitting element for being installed at the fitting element.

Advantageously, by using the assembly system for installing the conduit and the fitting element, a mechanical installation system may be provided to execute the product installation without the need for high levels of physical exertion and may remove the need for manual installation. This may provide an automated solution with a more versatile installation mechanism compared to the conventional mechanical installation for conduits and fittings under manual force, which may become excessive at high conduit diameters. The present assembly system may remove the potential for incorrect installation by manual means and ensures correct fitment every time.

According to an embodiment, the assembly system may further comprise an attachment interface subsystem, which may be configured to interchangeably attach the at least one conduit holder to the conduit holder adapter and may comprise a first protrusion and a first groove. The first protrusion may be arranged at and extend from a bottom surface of the at least one conduit holder of the conduit leading subsystem, while the first groove may be arranged at a top surface of the conduit holder adapter of the conduit leading subsystem and configured to receive the first protrusion, so that the first protrusion can mate with the first groove.

In other words, the first protrusion and the first groove of the at least one conduit holder may engage with one another and form a firm connection of the at least one conduit holder and the conduit holder adapter as a whole for the assembling of the conduit and the fitting element.

As a sealed conduit assembling system, the present assembly system may be designed to be a configurable tool for installing conduit to fittings by means of the conduit leading subsystem and a fitting securing subsystem, which may form together a lead screw linear motion system that may drive the conduit into the fitting or fitting system, and by means of the attachment interface subsystem for the configurable sizing, which may allow for interchangeable attachments that may enable different conduit sizes to be compatible with the tool.

The lead screw may be supported by bearings through the tool's uprights and axially secured by clamp collars. In this way, the hinged jaw or the hinged conduit holder may be secured to a flanged nut on the lead screw. When the lead screw may be turned by hand or a powered method, the hinged conduit holder and the secured conduit may be driven forward toward the sealed fitting element that may be secured at an end of the assembly system along the elongated screw lead.

According to another embodiment, the fitting securing subsystem may further comprise a fitting supporting unit, which may comprise at least one fitting support and a fitting supporter adapter, to which the fitting supporter may be secured. The at least one fitting supporter may be configured to align the fitting element to be arranged horizontally, so that the conduit can be driven horizontally into the fitting element with the linear motion.

According to another embodiment, the attachment interface subsystem may further comprise a second protrusion, which may be arranged at and extend from a bottom surface of the at least one fitting holder of the fitting securing subsystem, and a second groove, which may be arranged at a top surface of the fitting holder adapter fo the conduit leading subsystem and configured to receive the second protrusion, so that the second protrusion can mate with the second groove.

The attachment interface subsystem may be configured to interchangeably attach the at least one fitting holder to the fitting holder adapter by means of the second protrusion and the second groove.

According to another embodiment, the attachment interface subsystem may further comprise a third protrusion and a third groove. The third protrusion may be arranged at and extend from a bottom surface of the at least one fitting supporter of the fitting securing subsystem, and the third groove may be arranged at a top surface of the fitting supporter adapter of the conduit leading subsystem and configured to receive the third protrusion, so that the third protrusion can mate with the third groove. The attachment interface subsystem may be configured to interchangeably attach the at least one fitting supporter to the fitting supporter adapter by means of the third protrusion and the third groove.

The second protrusion and the second groove, the third protrusion and the third groove of the attachment interface subsystem may engage with one another, respectively, in order to form a respective firm connection of the at least one fitting holder and the fitting holder adapter as a whole and a respective firm connection of the at least one fitting supporter and the fitting supporter adapter as a whole for assembling the conduit and the fitting element.

In other words, the attachment interface subsystem may comrprise multiple grooved geometry at multiple system uprights, which may for example be provided as the lower half-ring of the conduit holder, the lower half-ring of the fitting holder and/or the half-ring fitting supporter, and multiple mating ribbed geometry at multiple sizing attachment, which may for example be provided as the conduit holder adapter, the fitting holder adapter and/or the fitting supporter adapter.

According to another embodiment, at least one of the at least one conduit holder and the at least one fitting holder may be designed to be hinged ring-shaped and has a screw closure.

For example, the at least one conduit holder may comprise an upper half-ring and a lower half-ring, which may be connected to one another via a hinge. For example, the upper and lower half-rings and the hinge may be assembled at a hinge point by means of a fastening mean, such as a screw or a bolt and form accordingly a jaw, which may secure around the conduit and push the conduit forward into the fitting element as the jaw may advance. The at least one conduit holder may be opened or closed to release or to hold the conduit being placed at the lower half-ring by pivoting the upper half-ring relative to the lower half-ring via the hinge.

For example, the screw closure of the at least one conduit holder may be configured to firmly hold or fix the conduit to the conduit holder. The screw closure may comprise opposed lugs, which may be arranged laterally from the ring-shaped conduit holder, and a screw or a bolt which may be arranged through the opposed lugs for tightening up the conduit holder. The upper and lower half-ring conduit holder may comprise a diameter corresponding to an outer diameter of the conduit.

Similarly, the screw closure may be arranged at the at least one fitting holder for firmly holding or fixing the fitting element to the fitting holder. The screw closure may also comprise opposed lugs, a screw or a bolt which may be arranged laterally from the ring-shaped fitting holder. The upper and lower half-ring fitting holder may comprise a diameter corresponding to an outer diameter of the fitting element.

According to another embodiment, the at least one conduit holder may comprise a plurality of conduit holders, each of which may be configured to fit a size and/or a form of the conduit. Alternatively or additionally, the at least one fitting holder may comprise a plurality of fitting holders, each of which may be configured to fit a size and/or a form of the fitting element, which may be designed to mate with the conduit, and the at least one fitting supporter may comprise a plurality of fitting supporters, each of which may be configured to fit the size and/or the form of the fitting element.

Hence, the at least one conduit holder and/or the at least one fitting holder may be designed for configurable sizing, which may allow for interchangeable attachments of the conduit and the corresponding fitting element that may enable different conduit sizes to be compatible with the assembly system as a tool.

According to another embodiment, the fitting element may be, but not limited to, a straight fitting, a 45° elbow or a 90° elbow.

According to another embodiment, the at least one conduit holder may comprise an inner rib, which may extend at least partially around an inner circumference of a hinged ring-shaped conduit holder.

The internal ribbed profile that may be provided at the inner circumference of the hinged ring-shaped conduit holder may be designed to fit between corrugations of the conduit, so that the conduit may be firmly hold or securely gripped by the conduit holder and move jointly with the conduit holder and the conduit holder adapter in the linear motion driven by the leading shaft.

In case that the inner rib may extend completely around the inner circumference of the conduit, the 360° enclosure may be provided for correct alignment of the conduit inside the conduit holder.

According to another embodiment, the conduit holder adapter, the fitting holder adapter and/or the fitting supporter adapter may be designed to be plate-shaped.

Further, the conduit holder adapter, the fitting holder adapter and/or the fitting supporter adapter may be arranged vertically in parallel to on another along the leading shaft.

According to another embodiment, the conduit leading subsystem may further comprise a driving unit that may be arranged at an end of the leading shaft on a side of the conduit holder adapter facing away from the fitting holder adapter. The driving unit may be configured to drive the leading shaft, so that the leading shaft may be able to drive at least one conduit holder and the conduit holder adapter jointly into the linear motion towards the at least one fitting holder and the fitting holder adapter of the fitting securing subsystem.

According to another embodiment, the leading shaft may be a screw lead, which may be configured to connect the conduit holder adapter, the fitting holder adapter and/or the fitting supporter adapter via throughholes which may be arranged thereon along an longitudinal axis of the leading shaft. The driving unit may be a hex nut and configured to drive the screw lead into a rotatory motion. The screw lead may be configured to convert the rotatory motion into the linear motion of the at least one conduit holder and the conduit holder adapter.

According to a second aspect of the present invention, the use of an assembly system of the present disclosure is provided for assembling a conduit and a fitting element in an automation system.

As a sealed conduit system assembly tool, the assembly system of the present disclosure may provide an automatic mechanical installation solution for the conduit into the sealed conduit fitting, eliminating the manual force previously necessary for installation. The solution may use a lead screw linear motion system as described above to move a hinged conduit holder or a hinged jaw, which may grip the conduit and push the conduit into the fitting element that may be secured at an end of the assembly system or assembly tool, for example, along an elongated lead screw or leading shaft. Since the assembly system or the assembly tool may also be configurable for various sizes of the conduit, the assembly system may incorporate an interchangeable attachment system to configure the tool for a given size. Thus, the assembly system may efficiently and effectively aid the installation of the conduit into the sealed conduit fittings, by eliminating the risk for incorrect installation in case of manual installation and without considering the installation challenges for the fittings having large sizes or dimensions.

According to a third aspect of the present invention, a method is provided for assembling a conduit and a fitting element, which comprises the following steps:
- providing at least one conduit holder of a conduit leading subsystem for fitting a size and/or a form of the conduit and at least one fitting holder of a fitting securing subsystem for fitting a size and/or a form of the fitting element, which is designed to mate with the conduit;
- securing the at least one conduit holder to a conduit holder adapter of the conduit leading subsystem, by means of a first protrusion and a first groove of an attachment interface subsystem, and securing the at least one fitting holder to a fitting holder adapter of the fitting securing subsystem, by means of a second protrusion and a second groove of the attachment interface subsystem;
- providing a leading shaft of a conduit leading subsystem and connecting the leading shaft with the at least one conduit holder via the conduit holder adapter;
- fastening the conduit, by means of the at least one conduit holder, and the fitting element, by means of the at least one fitting holder; and
- driving the leading shaft to drive the at least one conduit holder and the conduit holder adapter jointly into the linear motion towards the at least one fitting holder and the fitting holder adapter of the fitting securing subsystem, for moving the conduit towards or into the fitting element for installing the conduit at the fitting element.

Additionally, a fitting supporting unit comprising at least one fitting supporter and a fitting supporter adapter may be provided, to which the fitting supporter may be secured. The fitting supporter may comprise a half ring, which may comprise an inner diameter corresponding to the inner diameter of the respective fitting holder. The fitting supporter may be designed to support the fitting element together with the at least one fitting holder and to align the fitting element to be arranged horizontally, so that the conduit may be driven into the fitting element while being driven into the linear motion.

The at least one conduit holder may comprise a plurality of conduit holders with various sizes and forms of various conduits, while the at least one fitting holder may comprise a plurality of fitting holders with various sizes and forms and the at least one fitting supporter may comprise a plurality of fitting supporters with various sizes and forms for various sizes and forms of the fitting element, corresponding to the various sizes and forms of the conduits. Thus, the attachment interface subsystem may advantageously provide a versatile interchangeably and flexible attaching subsystem for replacing the conduit holders and the fitting holders for multiple conduits and fitting elements.

In order to allow the leading shaft driving the conduit and the fitting element jointly, the conduit holder adapter, the fitting holder adapter and/or the fitting supporter holder may be arranged vertically in parallel to one another along the elongated leading shaft via multiple throughholes that may be arranged, respectively, in the conduit holder adapter, the fitting holder adapter and/or the fitting supporter adapter. The fitting holder adapter and the fitting supporter adapter may be fixed to the assembly system by means of a base plate having a slot, which base plate may be arranged horizontally in parallel to the elongated leading shaft. By contrast, the conduit holding adapter may be freely arranged at and connected to the leading shaft, without being fixed at the base plate.

For automatically driving the leading shaft and the connected at least one conduit holder and the conduit holder adapter, a driving unit may be provided at an end of the leading shaft on a side of the conduit holder adapter facing away from the fitting holder adapter. The driving unit may be a hex nut, which may be designed to be an attachment point for a motor or a drill in the automatic system, which may drive the hex nut for turning the lead screw to advance the conduit holder in a programmed and automatic way. For example, the leading shaft may be an elongated lead screw, which may be configured to be driven into a rotatory motion in a first direction and to transform the rotatory motion into the linear motion of the at least one conduit holder and the conduit holder adapter as a whole. In other words, the hex nut at the end the lead screw may be turned to push the conduit into the fitting element, and stopped once the conduit may be fully inserted into the fitting element.

Optionally, the method may further comprise additionally the step of checking the installing of the conduit at the fitting element, after the driving the leading shaft into a rotatory motion in a first direction, by driving the leading shaft to rotate in an opposite direction with a predefined speed.

The predefined speed may be significantly lower than the rotating speed of the leading shaft for the installation in the first rotatory direction. For example, the optional step may be provided to check the installation by slowly turning the hex nut into the opposite direction, until the assembling of the conduit and the fitting element 300 may be complete.

Further, there may be provided a computer program that may comprise machine-readable instructions that, when executed by one or more computers and/or compute instances, may cause the one or more computers and/or compute instances to perform a method for assembling a conduit and a fitting in an automation system.

There may be provided a non-transitory machine-readable data carrier and/or a download product with the computer program. A download product may be an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, may cause the one or more computers and/or compute instances to perform a method of assembling a conduit and a fitting element in an automation system, and/or with the machine-readable data carrier and/or download product with the computer program.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically an example of an assembly system for an automation system according to the present disclosure;
- Fig. 2: shows schematically a flow chart illustrating a method for assembling a conduit and a fitting element according to the present disclosure;
- Fig. 3a: shows schematically in a front view an example of at least one conduit holder of a conduit leading subsystem of an assembly system according to the present disclosure;
- Fig. 3b: shows schematically in a perspective view an example of at least one conduit holder in part of a conduit leading subsystem of an assembly system according to the present disclosure;
- Fig. 4a: shows schematically in a perspective view an example of at least one fitting supporter of an attachment interface subsystem of an assembly system according to the present disclosure;
- Fig. 4b: shows schematically examples of half-ring fitting supporters as at least one fitting supporter of an attachment interface subsystem of an assembly system according to the present disclosure;
- Fig. 4c: shows schematically in a side view an example of a third protrusion and a third groove for at least one fitting supporter of an attachment interface subsystem of an assembly system according to the present disclosure;
- Fig. 5a: shows schematically in a perspective view an example of an assembly system according to the present disclosure;
- Fig. 5b: shows schematically in a perspective view a further example of an assembly system according to the present disclosure;
- Fig. 5c: shows schematically in a perspective view a further example of an assembly system with a fitting element according to the present disclosure;
- Fig. 5d: shows schematically in a perspective view a further example of an assembly system with a conduit and a fitting element according to the present disclosure;
- Fig. 5e: shows schematically in a perspective view a further example of an assembly system after assembling a conduit and a fitting element according to the present disclosure;
- Fig. 5f: shows schematically in a perspective view a further example of an assembly system after assembling a conduit and a fitting element according to the present disclosure;
- Fig. 6a: shows schematically in a perspective view a example of an assembly system with a conduit and a fitting element according to the present disclosure;
- Fig. 6b: shows schematically in a perspective view a further example of an assembly system with a conduit and a fitting element according to the present disclosure;
- Fig. 6c: shows schematically in a perspective view a further example of an assembly system with a conduit and a fitting element according to the present disclosure;

The figures are merely schematic representations and serve only to illustrate examples of the disclosure. Identical or equivalent elements are in principle provided with the same reference signs.

### DETAILED DESCRIPTION OF EMBODIMENTS

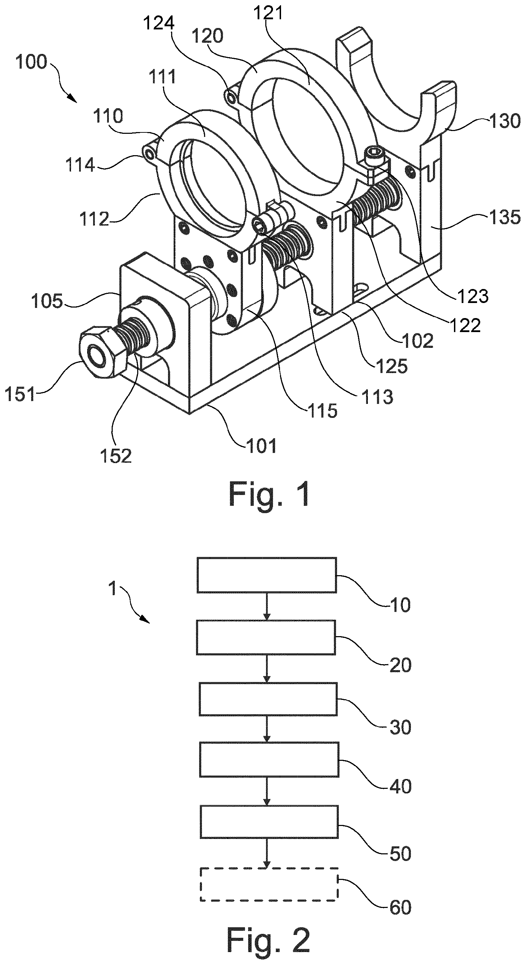

Fig. 1 shows schematically an example of an assembly system 100 for assembling a conduit 200 and a fitting element 300 for an automation system, so that the conduit 200 and the fitting element may be assembled automatically. The assembly system 100 comprises a conduit leading subsystem, a fitting securing subsystem and, additionally or optionally, an attachment interface subsystem.

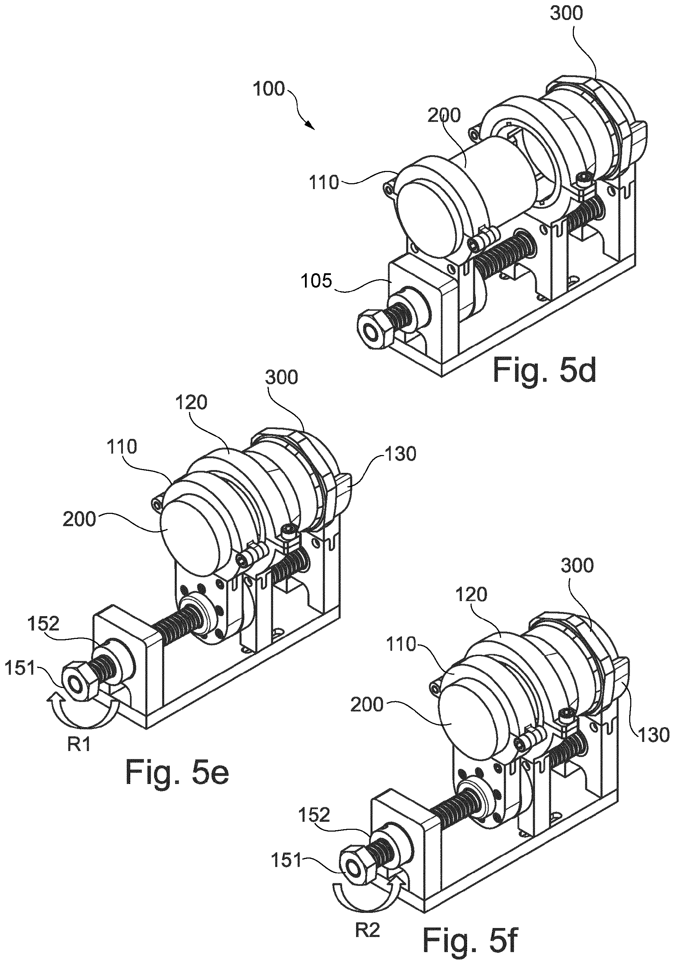

The conduit leading subsystem of the assembly system 100 may be configured to drive the conduit 200 into a linear motion towards or into the fitting element 300 and comprises at least one conduit holder 110, which may be configured to fasten the conduit 200 as shown in Fig. 5d to Fig. 5e while being installed at the fitting element 300, a leading shaft 152, and a conduit holder adapter 115, to which the at least one conduit holder 110 is secured and which is configured to connect the at least one conduit holder 110 to the leading shaft 152.

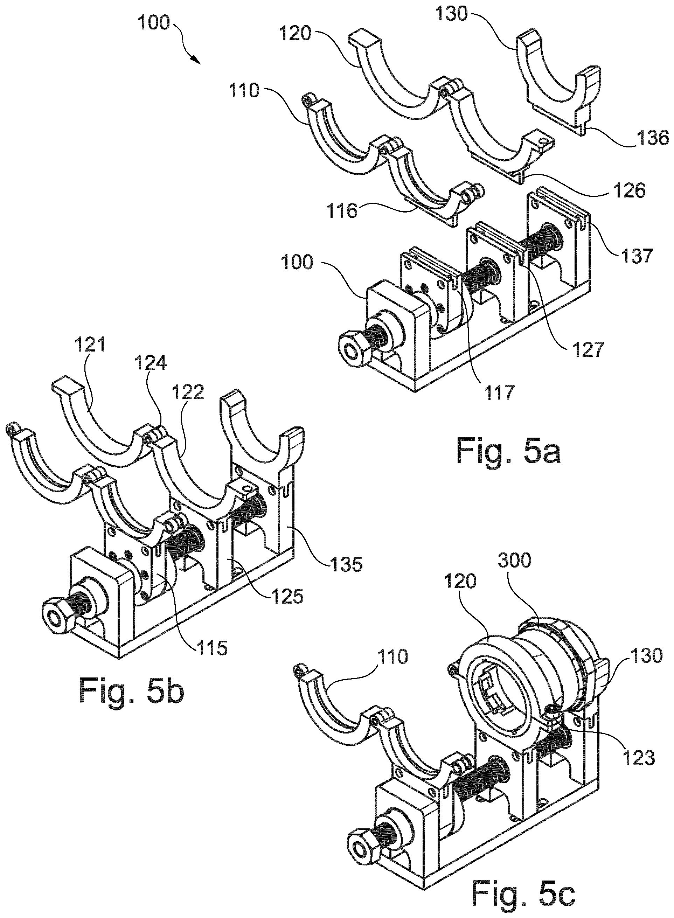

The fitting securing subsystem of the assembly system 100 comprises at least one fitting holder 120, which may be configured to fasten the fitting element 300 as shown in Fig. 5c to Fig. 5f, and a fitting holder adapter 125, to which the at least one fitting holder 120 is secured and which may be configured to fix the at least one fitting holder 120 when assembling the conduit 200 and the fitting element 300.

Further, the fitting securing subsystem of the assembly system 100 further comprises a fitting supporting unit, which comprises at least one fitting supporter 130 and a fitting supporter adapter 135, to which the fitting supporter 130 is secured. The at least one fitting supporter 130 may be configured to align the fitting element 300 to be arranged horizontally, so that the conduit 200 may be driven into the fitting element 300 with the linear motion.

The at least one conduit holder 110 may comprise a plurality of conduit holders, each of which may be configured to fit a size and/or a form of the conduit 200. Alternatively or additionally, the at least one fitting holder 120 may comprise a plurality of fitting holders, each of which may be configured to fit a size and/or a form of the fitting element 300, which may be designed to mate with the conduit 200, and the at least one fitting supporter 130 may comprise a plurality of fitting supporters, each of which may be configured to fit the size and/or the form of the fitting element 300. In other words, the plurality of conduit holders, fitting holders and fitting supporters may comprise each a series of conduit holder, fitting holders and fitting supporters in various sizes and shapes, so that each conduit holder, each fitting holder and/or each fitting supporter may be determined or selected, depending on the conduit 200 and the fitting element 300 to be connected.

As shown in Fig. 1, the conduit holder 110 and/or the fitting holder 120 may be designed, respectively, to be hinged ring-shaped and have each a screw closure 113, 123. In particular, the conduit holder 110 has an upper half-ring 111, a lower half-ring 112 and a hinge 114, which may be designed to connect the half-ring 111 and the lower half-ring 112 in a hinged design via a second screw closure and to allow the upper half-ring 111 being pivotable around an hinge point at the hinge 114. Additionally or alternatively, the fitting holder 120 comprises a second upper half-ring 121, a second lower half-ring 122 and a second hinge 124, which may be designed to connect the second half-ring 121 and the second lower half-ring 122 in a hinged design via a second screw closure and to allow the second upper half-ring 121 being pivotable around a second hinge point at the second hinge 124.

For example, the conduit holder 110 and the fitting holder 120 may comprise the same inner diameter, when the conduit 200 and the fitting element 300 may comprise the same outer diameter. Alternatively, the conduit holder 110 and the fitting holder 120 may comprise different inner diameters, corresponding to different outer diameters of the conduit holder 200 and the fitting element 300.

The fitting supporter 130 may be designed to be a half-ring fitting supporter 131 and comprise the same inner diameter as the fitting holder 120.

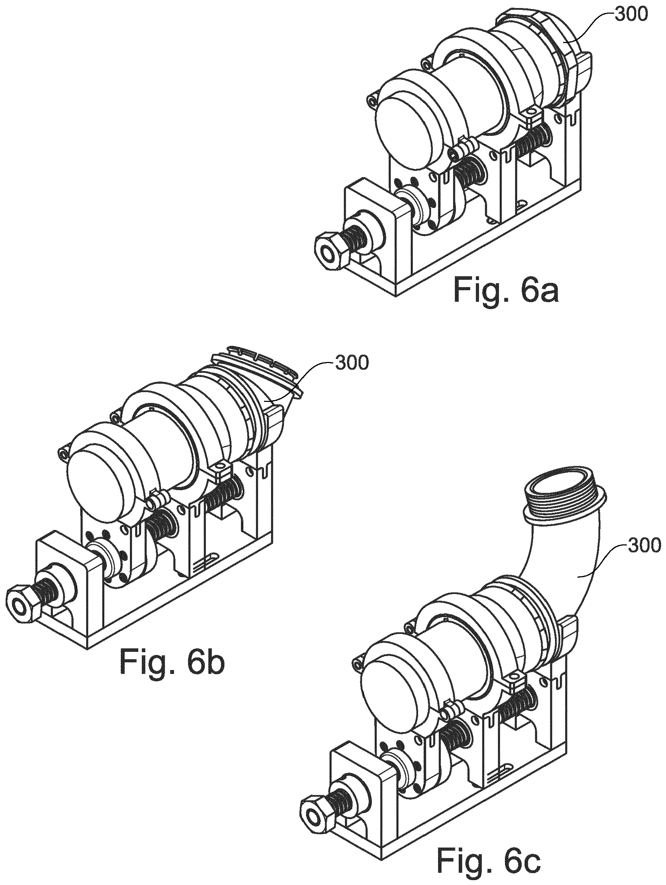

The fitting element 300 may be, but not limited to be, a straight fitting as shown in Fig. 6a, a 45° elbow as shown in Fig. 6b, or a 90° elbow as shown in Fig. 6c. Further, the slot 102 provided at the base plate 101 may be configured to adjust the fixing position of the fitting holder adapter 125 relative to the fitting supporter holder 135 and allow the fitting element 300 being placed stably or secured with an adapted or optimized distance between the fitting holder adapter 125 and the fitting supporter holder 135.

For example, the screw closure 113 of the at least one conduit holder 110 may be configured to firmly hold or fix the conduit 200 to the conduit holder 110. The screw closure 113 may comprise opposed lugs, which may be arranged laterally from the ring-shaped conduit holder 110, and a screw or a bolt which may be arranged through the opposed lugs for tightening up the conduit holder 110. The fitting holder 120 may comprise a similar structure of the screw closure 123. For example, the lugs of the conduit holder 110 and the fitting holder 120 may be in parallel or orthogonally oriented.

The leading shaft 152 of the conduit leading subsystem may be configured to drive the at least one conduit holder 110 and the conduit holder adapter 115 jointly into the linear motion towards the at least one fitting holder 120 and the fitting holder adapter 125 of the fitting securing subsystem, so that the conduit 200 may be movable towards the fitting element 300 for being installed at the fitting element 300.

For example, in Fig. 1, the leading shaft 152 of the conduit leading subsystem may be a screw lead, which may be configured to connect the conduit holder adapter 115, the fitting holder adapter 125 and/or the fitting supporter adapter 135 via throughholes that may be arranged along a longitudinal axis of the leading shaft 152. For example, the conduit holder adapter 115, the fitting holder adapter 125 and/or the fitting supporter adapter 135 may be designed to be plate-shaped, so that the conduit holder adapter 115, the fitting holder adapter 125 and/or the fitting supporter adapter 135 may be arranged vertically in parallel to one another along the elongated leading shaft 152.

In addition, as shown in Fig. 1, a front panel 105 may be provided and arranged vertically in parallel to the conduit holder adapter 115, the fitting holder adapter 125 and/or the fitting supporter adapter 135. The front panel 105 may be configured to define a depth for the movement of the conduit leading subsystem, in particular the joint movement of the at least one conduit holder 110 and the conduit holder adapter 115. Moreover, a base plate 101 may be provided and configured to allow the front panel 105, the fitting holder adapter 125 and/or the supporter adapter 135 being fixed, while the conduit holder adapter 115 may be freely moved by the leading shaft 152. The base plate 101 may comprise a slot 102, at which the fitting holder adapter 125 may be arranged and along which the fitting holder adapter 125 may slide for adjusting a predefined distance between the fitting holder adapter 125 and the supporter adapter 135, depending one the form of the fitting element 300.

Fig. 1 also shows that the conduit leading subsystem may further comprise a driving unit 151, which may be arranged at an end of the leading shaft 152 on a side of the conduit holder adapter 115 facing away from the fitting holder adapter 125. In particular, the driving unit 151 may be placed on a side of the front panel 105 facing away from the conduit holder adapter 115, the fitting holder adapter 125 and/or the fitting supporter holder 135. The driving unit 151 may be configured to drive the leading shaft 152, so that the leading shaft 152 may be able to drive at least one conduit holder 110 and the conduit holder adapter 115 jointly into the linear motion towards the at least one fitting holder 120 and the fitting holder adapter 125 of the fitting securing subsystem. For example, the driving unit 152 may be a hex nut and configured to drive the screw lead 152 into a rotatory motion. The screw lead 152 may be configured to convert the rotatory motion into the linear motion of the at least one conduit holder 110 and the conduit holder adapter 115.

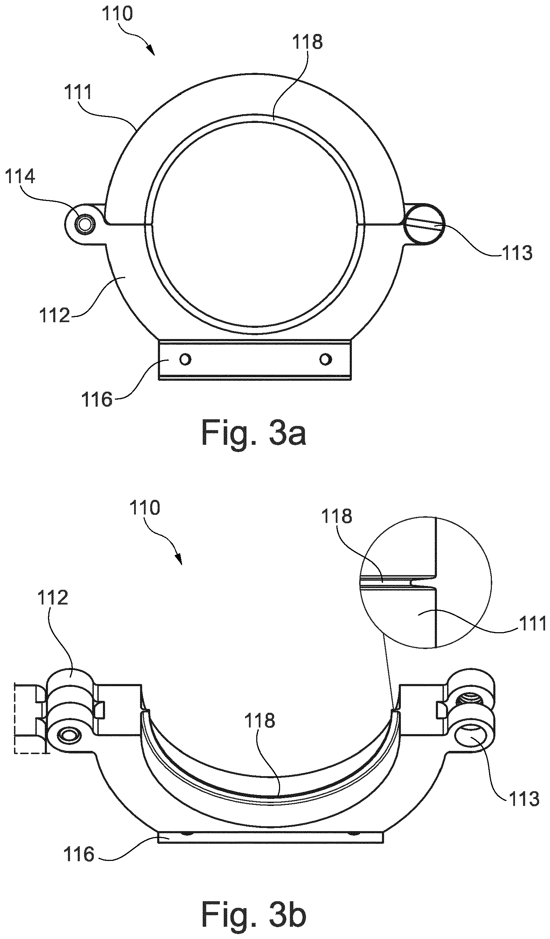

In order to interchangeably arrange the conduit holder 110, the fitting holder 120 and/or the supporter 130 at the conduit holder adapter 115, the fitting holder adapter 125 and/or the fitting supporter adapter 135, respectively, for the individual conduit 200 and/or the fitting element 300, the assembly system further comprises an attachment interface subsystem, as shown in Fig. 5a and Fig. 5b. The attachment interface subsystem comprises a first protrusion 116, which may be arranged at and extend from a bottom surface of the at least one conduit holder 110 of the conduit leading subsystem, as shown in Fig. 3a, and a first groove 117, which may be arranged at a top surface of the conduit holder adapter 115 of the conduit leading subsystem and configured to receive the first protrusion 116, so that the first protrusion 116 can mate with the first groove 117. The first protrusion 116 and the first groove may be further fixed by one or more fastening elements, such as screws or pressfittings.

Additionally, the attachment interface subsystem may further comprise a second protrusion 126, which may be arranged at and extend from a bottom surface of the at least one fitting holder 120 of the fitting securing subsystem, and a second groove 127, which may be arranged at a top surface of the fitting holder adapter 125 of the conduit leading subsystem and configured to receive the second protrusion 126, so that the second protrusion 126 can mate with the second groove 127. Thus, the attachment interface subsystem may be configured to interchangeably attach the at least one fitting holder 120 to the fitting holder adapter 125 by means of the second protrusion 126 and the second groove 127.

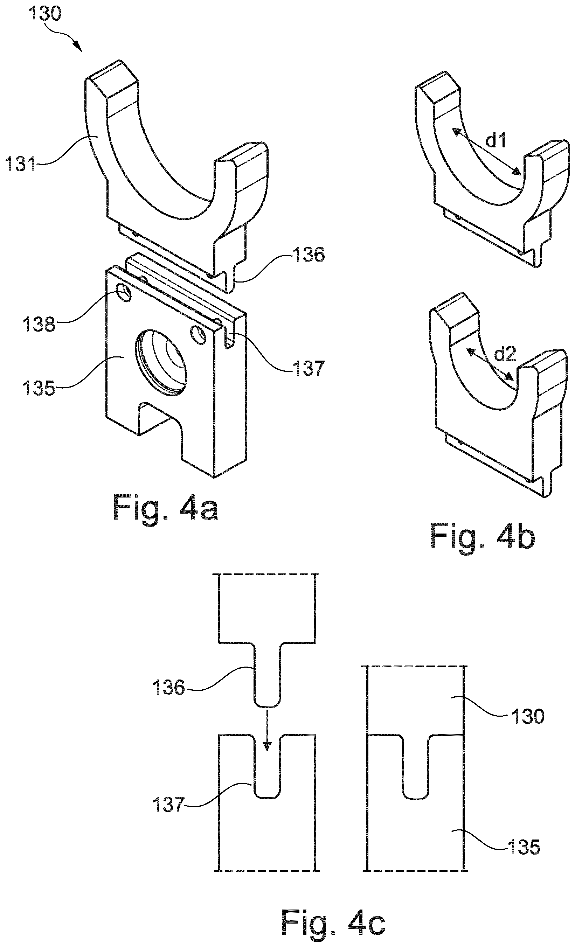

Additionally or alternatively, as shown in Fig. 4a to Fig. 4c, the attachment interface subsystem may further comprise a third protrusion 136, which may be arranged at and extend from a bottom surface of the at least one fitting supporter 130 of the fitting securing subsystem, and a third groove 137, which may be arranged at a top surface of the fitting supporter adapter 135 of the conduit leading subsystem and configured to receive the third protrusion 136, so that the third protrusion 136 can mate with the third groove 137. Accordingly, the attachment interface subsystem may be configured to interchangeably attach the at least one fitting supporter 130 to the fitting supporter adapter 135 by means of the third protrusion 136 and the third groove 137. For example, in Fig. 4b, the at least one fitting supporter 136 may be designed to fit various outer diameters of the conduit 200 and comprise either a first inner diameter d1 or a second inner diameter d2 that is smaller than the first inner diameter d1. Independently of the first or second inner diameters d1, d2, the fitting supporter 130 may comprise a unique third protrusion at the bottom surface, so that the fitting supporter 130 may be mounted to the common fitting supporter adapter 135 via the common third groove 137.

Fig. 3a and Fig. 3b show that, in order to firmly attach the conduit 200 to the conduit holder 110 while being moved towards and assembled to the fitting element 300, the at least one conduit holder 110 may comprise an inner rib 118, which may extend at least partially around an inner circumference of the hinged ring-shaped conduit holder 110. For example, the inner rib 118 may extend along the whole inner circumference of the conduit holder 110. Alternatively, the inner rib 118 may comprise one or more rib segments that may be arranged and distributed along the inner circumference of the conduit holder 110. The ribbed profile of the conduit holder 110 may allow the conduit holder 110 engaging with a grooved structure that may be provided at the outer surface of the conduit 200. Additionally or alternatively, the ribbed profile may also be provided similarly at the at least one fitting holder 120.

Fig. 2 shows a flow chat illustrating an embodiment of a method 1 for assembling a conduit 200 and a fitting element 300 in an automation system.

In step 10, at least one conduit holder 110 of a conduit leading subsystem and at least one fitting holder 120 of a fitting securing subsystem may be provided. While the at least one conduit holder 110 may be configured for fitting a size and a form of the conduit 200, the at least one fitting holder 120 may be configured for fitting a size and/or a form of the fitting element 300. For example, the at least one conduit holder 110 and the at least one fitting holder 120 may be designed to be hinged ringed-shaped and have each a screw closure 113, 223. For example, the at least one conduit holder 110 or the at least one fitting holder 120 may comprise, respectively, an inner diameter, corresponding to an outer diameter of the conduit 200 or the fitting element 300.

In addition, a fitting supporting unit comprising at least one fitting supporter 130 and a fitting supporter adapter 135 may be provided, to which the fitting supporter 130 may be secured. The fitting supporter may comprise a half ring, which may comprise an inner diameter corresponding to the inner diameter of the respective fitting holder 120. The fitting supporter may be designed to support the fitting element 300 together with the at least one fitting holder 120 and to align the fitting element 300 to be arranged horizontally, so that the conduit 200 may be driven into the fitting element 300 while being driven into the linear motion.

In step 20, further as shown in Fig. 5a and Fig. 5b, the at least one conduit holder 110 may be secured to a conduit holder adapter 115 of the conduit leading subsystem, by means of an attachment interface subsystem, in particular, by means of a first protrusion 116 and a first groove 117. Also, the at least one fitting holder 120 may be secured to ta fitting holder adapter of the fitting securing subsystem, by means of the attachment interface subsystem, in particular, by means of a second protrusion 126 and a second groove 127. Further, the at least one fitting supporter 130 may be secured to a fitting supporter adapter 135 of the fitting securing subsystem, by means of the attachment interface subsystem, in particular, by means of a third protrusion 136 and a third groove 137.

For example, the at least one conduit holder 110 may comprise a plurality of conduit holders with various sizes and forms of various conduits 220, which the at least one fitting holder 120 may comprise a plurality of fitting holders with various sizes and forms and the at least one fitting supporter 130 may comprise a plurality of fitting supporters with various sizes and forms for various sizes and forms of the fitting element 300, corresponding to the various sizes and forms of the conduits 220. Thus, the attachment interface subsystem may advantageously provide a versatile interchangeably and flexible attaching subsystem for replacing the conduit holders and the fitting holders for multiple conduits and fitting elements.

In step 30, a leading shaft 152 of a conduit leading subsystem may be provided, and the leading shaft 152 may be connected to the at least one conduit holder 110 via the conduit holder adapter 115. Additionally, the leading shaft 52 may be connected to the at least one fitting holder 120 via the fitting holder adapter 125 and/or to the at least one fitting supporter 130 via the fitting supporter adapter 135.

As shown in Fig. 1, Fig. 5a to Fig. 5f, the conduit holder adapter 115, the fitting holder adapter 125 and/or the fitting supporter adapter 135 may be arranged vertically in parallel to one another along the leading shaft 152 via throughholes being arranged, respectively, in the conduit holder adapter 115, the fitting holder adapter 125 and the fitting supporter adapter 135.

In step 40, further as shown in Fig. 5c and Fig. 5d, the fitting element 300 may be fastened to the at least one fitting holder 120, and the conduit 200 may be fastened to the at least one conduit holder 110. In the same time, the fitting element 300 may be placed or rest on the fitting supporter 130. Moreover, the at least one conduit holder 110 may comprise an inner rib 118 or an inner rib profile, as shown in Fig. 3a and Fig. 3b, which may extend at least partially around the inner circumference of the hinged ring-shaped conduit holder 110.

The at least one fitting holder 120 may be designed to be a jaw, which may secure around the conduit 200, and configured to push the conduit 110 forward into the fitting element 300 as the conduit 200 may advance in the linear motion.

Subsequently, in step 50, the leading shaft 152 may be driven to drive the at least one conduit holder 110 and the conduit holder adapter 115 jointly into the linear motion towards the at least one fitting holder 120 and the fitting holder adapter 125 of the fitting securing subsystem, for moving the conduit 200 towards or into the fitting element 300, for installing the conduit 200 at the fitting element.

In order to automatically drive the leading shaft 152 and the connected at least one conduit holder 110 and the conduit holder adapter 115, a driving unit 151 may be provided at an end of the leading shaft 152 on a side of the conduit holder adapter 115 facing away from the fitting holder adapter 125. The driving unit may be a hex nut, which may be designed to be an attachment point for a motor or a drill in the automatic system, which may drive the hex nut for turning the lead screw 152 to advance the conduit holder 110 in a programmed and automatic way.

For example, Fig. 5e shows that the leading shaft 152 may be an elongated lead screw, which may be configured to be driven into a rotatory motion in a first direction R1 and to transform the rotatory motion into the linear motion of the at least one conduit holder 110 and the conduit holder adapter 115 as a whole. In other words, the hex nut 151 at the end the lead screw 152 may be turned to push the conduit 200 into the fitting element 300, and stopped once the conduit 200 may be fully inserted into the fitting element 300.

Optionally, the method 1 may further comprise step 60, in which the installing of the conduit 200 at the fitting element 300 may be checked, after the step 50 of driving the leading shaft 152 into the rotatory motion in the first direction R1, by driving the leading shaft 152 to rotate in an opposite direction R2 with a predefined speed. The predefined speed may be significantly lower than the rotating speed of the leading shaft 152 for the installation in the first rotatory direction R1. For example, the optional step 60 is desired to check the installation by slowly turning the hex nut 151 into the opposite direction R2, until the assembling of the conduit 200 and the fitting element 300 may be complete.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 1: method for assembling a conduit and a fitting element
- 10: step of providing at least one conduit holder and at least one fitting holder
- 20: step of securing at least one conduit holder to a conduit holder adapter and securing at least one fitting holder to a fitting holder adapter
- 30: step of providing a leading shaft
- 40: step of fastening a conduit and a fitting element
- 50: step of driving a leading shaft to drive at least one conduit holder and a conduit holder adapter
- 60: step of checking the installation of a conduit at a fitting element
- 100: assembly system
- 101: base plate
- 102: slot
- 105: front plate
- 110: at least one conduit holder
- 111: upper half-ring
- 112: lower half-ring
- 113: screw closure
- 114: hinge
- 115: conduit holder adapter
- 116: first protrusion
- 117: first groove
- 118: inner rib
- 120: at least one fitting holder
- 121: second upper half-ring
- 122: second lower half-ring
- 124: hinge
- 123: screw closure
- 125: fitting holder adapter
- 126: second protrusion
- 127: second groove
- 130: at least one fitting supporter
- 131: half-ring fitting supporter
- 135: fitting supporter adapter
- 136: third protrusion
- 137: third groove
- 138: fixing element
- 151: driving unit
- 152: leading shaft
- 200: conduit
- 300: fitting element
- d1: first diameter
- d2: second diameter
- R1: first direction
- R2: opposite direction

## Claims

1. Assembly system (100) for assembling a conduit (200) and a fitting element (300) for an automation system, comprising:
a conduit leading subsystem, configured to drive the conduit (200) into a linear motion towards or into the fitting element (300), comprising:
at least one conduit holder (110), configured to fasten the conduit (200) while being installed at the fitting element (300),
a leading shaft (152), and
a conduit holder adapter (115), to which the at least one conduit holder (110) is secured, and which is configured to connect the at least one conduit holder (110) to the leading shaft (152), and
a fitting securing subsystem, comprising:
at least one fitting holder (120), configured to fasten the fitting element (300), and
a fitting holder adapter (125), to which the at least one fitting holder (120) is secured, and which is configured to fix the at least one fitting holder (120);
wherein the leading shaft (152) is configured to drive the at least one conduit holder (110) and the conduit holder adapter (115) jointly into the linear motion towards the at least one fitting holder (120) and the fitting holder adapter (125) of the fitting securing subsystem, so that the conduit (200) is movable towards the fitting element (300) for being installed at the fitting element (300).

2. The assembly system (100) according to claim 1, further comprising:
an attachment interface subsystem, configured to interchangeably attach the at least one conduit holder (110) to the conduit holder adapter (115), comprising:
a first protrusion (116), arranged at and extending from a bottom surface of the at least one conduit holder (110) of the conduit leading subsystem, and
a first groove (117), arranged at a top surface of the conduit holder adapter (115) of the conduit leading subsystem and configured to receive the first protrusion (116), so that the first protrusion (116) can mate with the first groove (117).

3. The assembly system (100) according to according to claim 1 or 2,
wherein the fitting securing subsystem further comprises a fitting supporting unit, which comprises at least one fitting supporter (130) and a fitting supporter adapter (135), to which the fitting supporter (130) is secured;
wherein the at least one fitting supporter (130) is configured to align the fitting element (300) to be arranged horizontally, so that the conduit (200) can be driven horizontally into the fitting element (300) with the linear motion.

4. The assembly system (100) according to any of the preceding claims,
wherein the attachment interface subsystem further comprises:
a second protrusion (126), arranged at and extending from a bottom surface of the at least one fitting holder (120) of the fitting securing subsystem, and
a second groove (127), arranged at a top surface of the fitting holder adapter (125) of the conduit leading subsystem and configured to receive the second protrusion (126), so that the second protrusion (126) can mate with the second groove (127);
wherein the attachment interface subsystem is configured to interchangeably attach the at least one fitting holder (120) to the fitting holder adapter (125) by means of the second protrusion (126) and the second groove (127).

5. The assembly system (100) according to any of the preceding claims,
wherein the attachment interface subsystem further comprises:
a third protrusion (136), arranged at and extending from a bottom surface of the at least one fitting supporter (130) of the fitting securing subsystem, and
a third groove (137), arranged at a top surface of the fitting supporter adapter (135) of the conduit leading subsystem and configured to receive the third protrusion (136), so that the third protrusion (136) can mate with the third groove (137);
wherein the attachment interface subsystem is configured to interchangeably attach the at least one fitting supporter (130) to the fitting supporter adapter (135) by means of the third protrusion (136) and the third groove (137).

6. The assembly system (100) according to any of the preceding claims,
wherein at least one of the at least one conduit holder (110) and the at least one fitting holder (120) is designed to be hinged ring-shaped and has a screw closure (113, 123).

7. The assembly system (100) according to any of the preceding claims,
wherein the at least one conduit holder (110) comprises a plurality of conduit holders, each of which is configured to fit a size and/or a form of the conduit (200); and/or
wherein the at least one fitting holder (120) comprises a plurality of fitting holders, each of which is configured to fit a size and/or a form of the fitting element (300), which is designed to mate with the conduit (200), and the at least one fitting supporter (130) comprises a plurality of fitting supporters, each of which is configured to fit the size and/or the form of the fitting element (300).

8. The assembly system (100) according to any of the preceding claims,
wherein the fitting element (300) is a straight fitting, a 45° elbow or a 90° elbow.

9. The assembly system (100) according to any of the preceding claims,
wherein the at least one conduit holder (110) comprises an inner rib (118), extending at least partially around an inner circumference of a hinged ring-shaped conduit holder (110).

10. The assembly system (100) according to any of the preceding claims,
wherein the conduit holder adapter (115), the fitting holder adapter (125) and/or the fitting supporter adapter (135) are designed to be plate-shaped;
wherein the conduit holder adapter (115), the fitting holder adapter (125) and/or the fitting supporter adapter (135) are arranged vertically in parallel to one another along the leading shaft (152).

11. The assembly system (100) according to any of the preceding claims,
wherein the conduit leading subsystem further comprises a driving unit (151), which is arranged at an end of the leading shaft (152) on a side of the conduit holder adapter (115) facing away from the fitting holder adapter (125);
wherein the driving unit (151) is configured to drive the leading shaft (152), so that the leading shaft (152) is able to drive at least one conduit holder (110) and the conduit holder adapter (115) jointly into the linear motion towards the at least one fitting holder (120) and the fitting holder adapter (125) of the fitting securing subsystem.

12. The assembly system (100) according to any of the preceding claims,
wherein the leading shaft (152) is a screw lead, configured to connect the conduit holder adapter (115), the fitting holder adapter (125) and/or the fitting supporter adapter (135) via throughholes being arranged along a longitudinal axis of the leading shaft (152);
wherein the driving unit (152) is a hex nut and configured to drive the screw lead into a rotatory motion;
wherein the screw lead is configured to convert the rotatory motion into the linear motion of the at least one conduit holder (110) and the conduit holder adapter (115).

13. Use of an assembly system (100) according to one of the preceding claims 1 to 12 for assembling a conduit (200) and a fitting element (300) in an automation system.

14. Method (1) for assembling a conduit (200) and a fitting element (300), comprising the steps of:
providing (10) at least one conduit holder (110) of a conduit leading subsystem for fitting a size and/or a form of the conduit (200) and at least one fitting holder (120) of a fitting securing subsystem for fitting a size and/or a form of the fitting element (300), which is designed to mate with the conduit (200);
securing (20) the at least one conduit holder (110) to a conduit holder adapter (115) of the conduit leading subsystem, by means of a first protrusion (116) and a first groove (117) of an attachment interface subsystem, and securing the at least one fitting holder (120) to a fitting holder adapter (125) of the fitting securing subsystem, by means of a second protrusion (126) and a second groove (127) of the attachment interface subsystem;
providing (30) a leading shaft (152) of a conduit leading subsystem and connecting the leading shaft (152) with the at least one conduit holder (110) via the conduit holder adapter (115);
fastening (40) the conduit (200), by means of the at least one conduit holder (110), and fastening the fitting element (300), by means of the at least one fitting holder (120); and
driving (50) the leading shaft (152) to drive the at least one conduit holder (110) and the conduit holder adapter (115) jointly into the linear motion towards the at least one fitting holder (120) and the fitting holder adapter (125) of the fitting securing subsystem, for moving the conduit (200) towards or into the fitting element (300) for installing the conduit (200) at the fitting element (300).

15. The method (1), further comprising the step of:
checking (60) the installing of the conduit (200) at the fitting element (300), after the driving (50) the leading shaft (152) into a rotatory motion in a first direction (R1), by driving the leading shaft (152) to rotate in an opposite direction (R2) with a predefined speed.
